# EUROPÄISCHE PATENTSCHRIFT

(11) **EP 4 039 444 B1**
(45) Veröffentlichungstag und Bekanntmachung des Hinweises auf die Patenterteilung: **11.06.2025**
(21) Anmeldenummer: 22152655.1
(22) Anmeldetag: 21.01.2022
(51) Int. Cl.: B29C 45/76, H02P 3/14

(54) **VERFAHREN ZUM BETREIBEN EINER FERTIGUNGSANLAGE**
METHOD FOR OPERATING A PRODUCTION FACILITY
PROCÉDÉ DE FONCTIONNEMENT D'UN SYST?ME DE FABRICATION

(30) Priorität: 04.02.2021 DE 102021102564
(43) Veröffentlichungstag der Anmeldung: 10.08.2022
(73) Patentinhaber: Wittmann Battenfeld GmbH, 2542 Kottingbrunn (AT)
(72) Erfinder: Brunbauer, Klaus, 2540 Bad Vöslau (AT); Zöhling, Bernhard, 2751 Steinabrückl (AT)
(74) Vertreter: Gosdin, Carstensen & Partner Patentanwälte Partnerschaftgesellschaft mbB

(56) Entgegenhaltungen:
- DE-A1- 10 324 516
- DE-A1- 102009 033 228
- JP-A- 2000 202 886
- US-B1- 6 333 611

## Beschreibung

Die Erfindung betrifft ein Verfahren zum Betreiben einer Fertigungsanlage, wobei die Fertigungsanlage mindestens eine Kunststoffverarbeitungsmaschine und eine Energieversorgung umfasst, wobei die Kunststoffverarbeitungsmaschine und/oder ein mit dieser zusammenwirkendes Zusatzaggregat mindestens einen Motor umfasst, der zum Antrieb eines Bauteils der Kunststoffverarbeitungsmaschine oder zum Antrieb des Zusatzaggregats ausgebildet ist sowie zum generatorischen Betrieb im Falle des Abbremsens einer Bewegung des Bauteils oder des Zusatzaggregats, wobei die Kunststoffverarbeitungsmaschine weiterhin mindestens ein Heizelement zum Erwärmen von Kunststoffmaterial umfasst, wobei die Energieversorgung ein Wechselstromnetz umfasst, welches über einen Stromrichter mit einem Gleichstromnetz verbunden ist, und eine Gleichstromquelle umfasst, die mit dem Gleichstromnetz verbunden ist, wobei die Kunststoffverarbeitungsmaschine mit dem Gleichstromnetz zur Versorgung mit elektrischer Energie verbunden wird, wobei über ein Steuerelement erfasst wird, ob der mindestens eine Motor und/oder das Zusatzaggregat generatorisch Energie erzeugt, wobei im Falle dessen, dass vom Motor und/oder vom Zusatzaggregat generatorisch Energie erzeugt wird, vom Steuerelement ein Halbleiterschaltelement angesteuert wird, um die generatorisch erzeugte Energie dem Heizelement zuzuleiten, wobei die Einspeisung generatorisch erzeugter Energie vom Motor und/oder vom Zusatzaggregat in einen Gleichstromzwischenkreis der Kunststoffverarbeitungsmaschine erfolgt, der mit dem Gleichstromnetz verbunden werden kann und wobei mindestens ein Speicherelement für elektrische Energie, insbesondere ein Kondensator, mit dem Gleichstromzwischenkreis elektrisch verbunden ist.

Ein gattungsgemäßes Verfahren wird in der DE 10 2009 033 228 A1 beschrieben. Ähnliche und weitere Lösungen zeigen die DE 10 2006 036 267 A1**,** die DE 10 2013 104 814 A1**,** die DE 101 52 198 A1**,** die DE 103 24 516 A1 und die US 6 333 611 B1**.** In der JP 2000 202886 A wird eine Spritzgießmaschine offenbart, bei der zur Energieversorgung eine Photovoltaikanlage eingesetzt wird.

Die effiziente Versorgung von Kunststoffverarbeitungsmaschinen und insbesondere von Spritzgießmaschinen mit Energie ist insbesondere unter dem Gesichtspunkt der Umweltverträglichkeit eine relevante Aufgabe. Dabei haben derartige Maschinen häufig drehzahlvariable Antriebe. Die Maschinen sind zum Anschluss an Wechselstromnetze ausgelegt. Das Wechselstromnetz speist dabei über einen Stromrichter (d. h. Gleichrichter) einen Gleichstromzwischenkreis, von dem aus die Maschine dann mit Energie versorgt wird. Eine solche Lösung ist aus der genannten DE 10 2009 033 228 A1 bekannt.

Dabei ist es grundsätzlich möglich, dass die Kunststoffverarbeitungsmaschine auch generatorisch betrieben wird, worunter zu verstehen ist, dass beim Abbremsen einer Bewegung der Maschine der Abbremsvorgang genutzt wird, um mittels des Antriebsmotors, der dann als Generator fungiert, Energie rückzugewinnen. Die rückgewonnene Energie wird dann augenblicklich in das elektrische Versorgungsnetz eingespeist (sofern eine AC-Rückspeiseeinheit verbaut ist).

Sofern für die Versorgung der Maschine mit Energie ein Gleichstromnetz (DC-Netz) zum Einsatz kommt, wird der aus der kinetischen Energie gewonnene Gleichstrom wiederum direkt in das Gleichstromnetz eingespeist.

Nachteilig ist hierbei allerdings folgendes: Sofern zum Zeitpunkt des Entstehens von Rekuperationsenergie innerhalb der Kunststoffverarbeitungsmaschine kein anderer Verbraucher Energie anfordert, muss die Rekuperationsenergie über gegebenenfalls lange Leitungen verlustbehaftet zu anderen Verbrauchern transportiert werden. Liegt der augenblickliche Energiebedarf unter dem Niveau, welches vom Gleichstromnetz bereitgestellt wird, so muss die Rekuperationsenergie, sofern auch keine Kapazitäten mehr in Speicherbatterien vorhanden sind, verlustbehaftet transformiert und in ein Wechselstrom-Netz eingespeist werden. Gegebenenfalls kann es sogar in sehr nachteiliger Weise nötig werden, die rückgewonnene Energie über Bremswiderstände thermisch abzubauen. In DC-Netzen mit mehreren rekuperationsfähigen Verbrauchern (Motoren) können sich zudem starke Schwankungen bei ungünstigem Zusammentreffen von Rekuperationsenergiespitzen ergeben, was zu Problemen führen kann.

Der Erfindung liegt die **Aufgabe** zugrunde, ein Verfahren vorzuschlagen, mit dem eine Fertigungsanlage mit einer Kunststoffverarbeitungsmaschine, insbesondere mit einer Spritzgießmaschine, so betrieben werden kann, dass eine verbesserte und ökologische Energieversorgung möglich ist, wobei bei rekuperativer Rückgewinnung von Energie aus der Kunststoffverarbeitungsmaschine bzw. aus Aggregaten, die mit dieser zusammenarbeiten, dafür Sorge getragen werden soll, dass eine verlustarme Nutzung dieser Energie erfolgen kann. Hierdurch soll auch das Stromnetz möglichst wenig gestört werden.

Die L ö s u n g dieser Aufgabe durch die Erfindung ist dadurch gekennzeichnet, dass als Gleichstromquelle eine Photovoltaikanlage eingesetzt wird, wobei vom Gleichstromnetz Energie in einen Energiespeicher in Form einer Batterie übertragen oder von diesem abgezogen wird, wobei elektrische Energie zwischen dem Gleichstromnetz und dem Gleichstromzwischenkreis über ein Anschaltmodul übertragen wird und wobei das Verfahren die Schritte aufweist:
a) Bestimmung der Summe der aktuell verfügbaren Rekuperationsenergie, die alle generatorisch arbeitenden Motoren und/oder Zusatzaggregate liefern;
b) Bestimmung der Summe der aus dem Gleichstromzwischenkreis entnommenen Energie, die alle an den Gleichstromzwischenkreis angeschlossenen Verbraucher benötigen;
c) Bestimmung der Differenz zwischen der Summe der Rekuperationsenergie gemäß Schritt a) und der Summe der entnommenen Energie gemäß Schritt b);
d) Veranlassung der Einspeisung von Energie in das Heizelement durch das Steuerelement und das Halbleiterschaltelement, wobei dem Heizelement der gemäß Schritt c) ermittelte Differenzbetrag an Energie zugeführt wird.

Hierdurch wird eine möglichst optimale Nutzung der Rekuperationsenergie ermöglicht und eine Rückeinspeisung in das Gleichstromnetz verhindert.

Durch dieses Vorgehen wird das Heizelement gezielt zum Abbau generatorisch erzeugter Energie genutzt und hierdurch gleichzeitig das elektrische Versorgungsnetz nur minimal belastet. Insbesondere kann die Umwandlung von generatorisch erzeugter Energie in ein Wechselstromnetz vermieden werden, so dass ein verlustarmes Energiemanagement möglich ist.

Vom Gleichstromnetz wird erfindungsgemäß Energie in einen Energiespeicher (Batterie) übertragen oder von diesem abgezogen. Dies ist insbesondere dann in Betracht zu ziehen, wenn die vorhandene Rekuperationsenergie innerhalb der Maschine höher ist, als es dem Bedarf im Heizelement entspricht, so dass dann elektrische Energie vom Gleichstromzwischenkreis ins Gleichstromnetz und weiter zum Energiespeicher fließt.

Der mindestens eine Motor der Kunststoffverarbeitungsmaschine ist bevorzugt als drehzahlvariabler Antrieb ausgebildet.

Das Halbleiterschaltelement ist bevorzugt als Bipolartransistor mit isolierter Gate-Elektrode (Insulated Gate Bipolar Transistor, IGBT) ausgebildet.

Die Temperatur in einem mit dem Heizelement erwärmten Bauteil wird bevorzugt im geschlossenen Regelkreis auf einer vorgegebenen Temperatur gehalten, insbesondere mittels des Steuerelements. So hat die Einspeisung von rekuperativer Energie in das Heizelement keine negativen Einflüsse auf die Qualität der Temperaturregelung.

Die Kunststoffverarbeitungsmaschine ist gemäß einer bevorzugten Ausführungsform der Erfindung eine Spritzgießmaschine. Das Heizelement ist in diesem Falle bevorzugt die Zylinderheizung einer Plastifiziereinheit der Spritzgießmaschine.

Das Zusatzaggregat ist bevorzugt ein Roboter, der mit der Kunststoffverarbeitungsmaschine zusammenwirkt.

Ferner kann vorgesehen werden, dass ein Steuerstromkreis elektrisch über ein Schaltnetzteil mit dem Gleichstromzwischenkreis in Verbindung steht, wobei die elektrischen Verbraucher der Kunststoffverarbeitungsmaschine vom Gleichstromzwischenkreis aus mit Energie versorgt werden und vom Steuerstromkreis aus angesteuert werden. Der elektrische Verbraucher ist beispielsweise eine Maschinensteuerung (CPU), eine Bedieneinheit (MMI), ein Steuerteil eines Servoumrichters, ein Sensor, eine Meldelampe, ein Schütz, ein Schalter, ein Ventil, ein Magnet oder ein Lüfter.

Betreffend der weiteren möglichen Ausgestaltung der Erfindung wird ausdrücklich auf die bereits oben genannte DE 10 2009 033 228 A1 Bezug genommen.

Demgemäß sieht die vorliegende Erfindung vor, dass entstehende rekuperative Energie (Bremsenergie aus dem Kunststoffverarbeitungsprozess) eines auch generatorisch arbeitenden Verbrauchers (insbesondere eines Motors) erfasst bzw. detektiert wird. Steht rekuperative Energie zur Verfügung, wird mittels eines schnell schaltenden Halbleiterschaltelements die Energie in entsprechendem Ausmaß in das Heizelement, insbesondere in die Zylinderheizung einer Plastifiziereinheit einer Spritzgießmaschine, eingespeist.

Die so in das Heizelement eingespeiste Rekuperationsenergie wird dabei bevorzugt von einem Temperaturregler berücksichtigt, so dass die Qualität der Temperaturregelung nicht gemindert wird.

Damit lässt sich in vorteilhafter Weise ein wesentlicher Beitrag zur Stabilisierung des Gleichstromnetzes durch Nutzung der Rekuperationsenergie innerhalb der Maschine leisten (im nachfolgend beschriebenen Ausführungsbeispiel ist der Energiefluss entweder mit unidirektionalen Energierichtungspfeilen oder Doppelpfeilen dargestellt, abhängig davon, ob Strom nur in eine Richtung fließt oder in beide Richtungen fließen kann).

Weiterhin können die Leitungsverluste beim Austausch von Rekuperationsenergie minimiert werden.

Vorteilhaft ist auch, dass Wandlungsverlusten (DC in AC) vermieden werden können. Besonders vorteilhaft ist es, wenn bei Anwendung des vorgeschlagenen Verfahrens eine Energievernichtung in Bremswiderständen vermieden werden kann.

In die Nutzung generatorisch arbeitenden Antriebe der Kunststoffverarbeitungsmaschine können, wie erläutert, auch gegebenenfalls Zusatzaggregate, insbesondere in Form von Robotern (z. B. Entnahmeroboter für die Entnahme von Werkstücken aus der Maschine), eingebunden werden. Auch hier kann Bremsenergie beim Betrieb des Zusatzaggregats wiedergewonnen und in der beschriebenen Weise dem Heizelement zugeführt werden.

Die Erfindung erlaubt somit eine effektive Nutzung der Potentiale der Gleichstrom-Technologie (DC-Technologie) und sieht zur Stromversorgung ein industrielles Gleichstromnetz vor, welches mit regenerativer Energie gespeist wird.

Der Gleichstromzwischenkreis der Kunststoffverarbeitungsmaschine wird dabei durch ein Anschaltmodul vorzugsweise inklusive Ladeschaltung und EMV-Filter verlustfrei mit dem Gleichstromnetz verbunden.

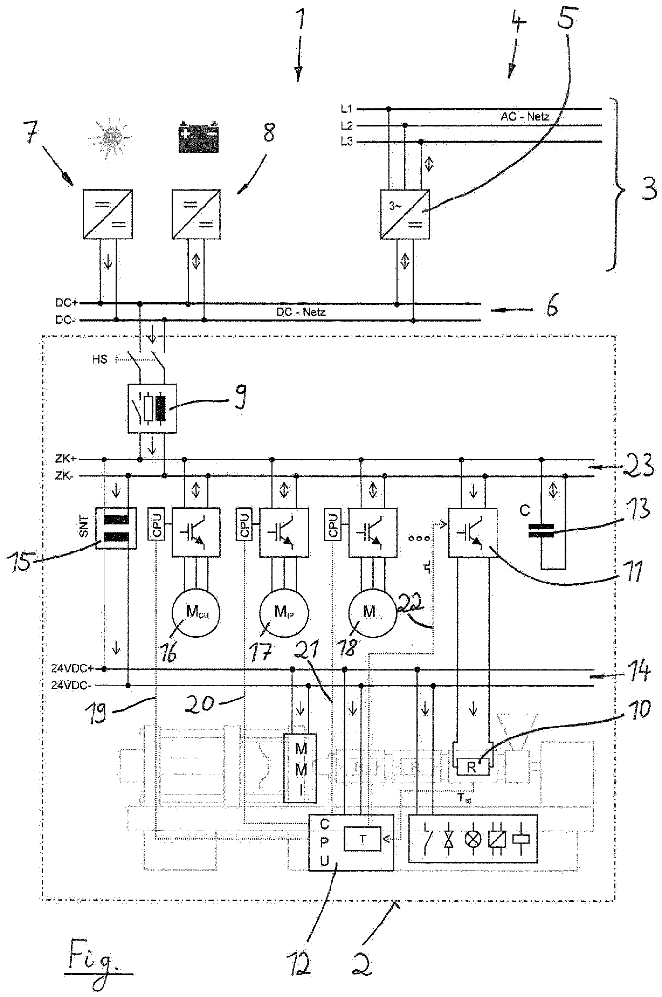

In der Zeichnung ist ein Ausführungsbeispiel der Erfindung dargestellt. Die einzige Figur zeigt schematisch das elektrische Schaltbild einer Fertigungsanlage umfassend eine Energieversorgung und eine Spritzgießmaschine.

In der Figur ist ein elektrisches Schaltbild dargestellt, welches eine Fertigungsanlage 1 zeigt, die eine Spritzgießmaschine 2 umfasst, die über eine Energieversorgung 3 mit elektrischer Energie versorgt wird.

Die Energieversorgung 3 umfasst dabei zwei Komponenten: Die erste Komponente ist ein Wechselstromnetz 4 (angedeutet sind drei Phasen L1, L2 und L3), welches über einen Stromrichter 5 (Gleichrichter) elektrische Energie in ein Gleichstromnetz 6 einspeist. Die zweite Komponente ist eine Gleichstromquelle 7 zusammen mit einem (optionalen) Energiespeicher 8, welche elektrische Energie in das Gleichstromnetz 6 einspeisen. Die Gleichstromquelle 7 ist hier als Photovoltaikanlage ausgebildet, die aus Sonnenenergie Gleichstrom generiert. Der Energiespeicher 8 ist eine Batterie, in der überschüssige Energie gespeichert und bei Bedarf wieder abgerufen werden kann.

Die Spritzgießmaschine 2 weist einen Gleichstromzwischenkreis 23 (ZK+/ ZK-) auf, der über ein Anschaltmodul 9 mit dem Gleichstromnetz 6 elektrisch verbunden werden kann (das Anschaltmodul 9 umfasst auch eine Ladeschaltung, ein Überbrückungsrelais sowie einen EMV-Filter). Angedeutet ist auch ein Hauptschalter HS zum Einschalten der Maschine.

Die Spritzgießmaschine ist vorliegend als rein elektrische Spritzgießmaschine ausgebildet. Demgemäß sind alle Antriebe der Maschine elektrisch ausgebildet, vorzugsweise mit Servomotoren. Dargestellt sind drei Motoren 16, 17 und 18, mit denen die benötigten Verstell-Bewegungen der Maschine bewerkstelligt werden. Der Motor 16 dient zum Antrieb der Schließeinheit der Spritzgießmaschine. Der Motor 17 dient zum Antrieb der Spritzeinheit. Der Motor 18 dient vorliegend zum Antrieb einer weiteren Achse, die z. B. diejenige eines Auswerfers sein kann. Die Motoren 16, 17, 18 sind auch ausgebildet, um generatorisch betrieben zu werden, d. h. aus kinetischer Energie elektrische Energie zu gewinnen. Wenn also eine Bewegung der Spritzgießmaschine abgebremst werden muss, wird als Bremselement der Motor eingesetzt, der hierbei elektrische Energie erzeugt und diese zurück in den Gleichstromzwischenkreis 23 einspeist bzw. weiter in das Gleichstromnetz 6, welches mit dem elektrischen Zwischenkreis 23 über das Anschaltmodul 9 verbunden ist.

Weiter dargestellt ist ein Heizelement 10, welches hier die Zylinderheizung einer Plastifiziereinheit ist. Das Heizelement 10 ist für hohe Spannungen geeignet, insbesondere für Spannungen von größer oder gleich 900 VDC. Ferner ist das Heizelement 10 geeignet zur Aufnahme von hohen, jedoch nur kurzzeitig wirksamen Leistungsspitzen, insbesondere von mindestens 30 kW über einen Zeitraum von mindestens 250 ms.

Die Motoren bzw. das Heizelement sind alle elektrisch mit dem Gleichstromzwischenkreis 23 verbunden.

Über diesen Gleichstromzwischenkreisverbund kann ein Energieaustausch stattfinden, wenn z. B. ein Antrieb 16, 17, 18 verzögert (gebremst) wird, hierdurch generatorisch arbeitet und Energie in den Gleichstromzwischenkreis 23 einspeist, die von einem anderen Verbraucher entnommen werden kann.

Hierzu ist erfindungsgemäß vorgesehen, dass über ein Steuerelement 12 erfasst wird, ob einer der Motoren 16, 17, 18 generatorisch Energie erzeugt, wobei im Falle dessen, dass von mindestens einem der Motoren 16, 17, 18 generatorisch Energie erzeugt wird, vom Steuerelement 12 ein Halbleiterschaltelement 11 angesteuert wird, um die generatorisch erzeugte Energie dem Heizelement 10 zuzuleiten.

Hierzu steht das Steuerelement 12 mit jeweiligen Datenleitungen 19, 20, 21 mit den Motoren 16, 17, 18 (bzw. deren Steuerelement "CPU") in Verbindung, so dass erfasst werden kann, wann einer der Motoren generatorisch arbeitet und folglich Energie in den Gleichstromzwischenkreis 23 einspeist.

Um eine möglichst optimale Nutzung der Rekuperationsenergie zu ermöglichen und eine Rückeinspeisung in das Gleichstromnetz zu verhindern, kann konkret vorgesehen werden, den aktuellen Rekuperationsenergiewert abzüglich des aktuellen Gesamtenergiebedarfes aller Motoren und sonstigen Verbraucher zu errechnen und das Heizelement 10 derart zu steuern, dass genau diese Energieüberschussmenge in das Heizelement 10 eingespeist wird. Insoweit wird auf die oben genannte Verfahrensweise mit den Schritten a) bis d) Bezug genommen.

Über eine Datenleitung 22 steuert im gegebenen Falle, also wenn generatorische Energie anfällt, das Steuerelement 12 das Halbleiterschaltelement 11 an, so dass dieses entsprechend Energie zum Betrieb des Heizelements 10 aus dem Gleichstromzwischenkreis 23 entnimmt.

Auf diese Art und Weise wird die Stabilität der elektrischen Versorgung in der Energieversorgung 3 verbessert.

Dabei kann dem Steuerelement 12 ein oberer Grenzwert vorgegeben werden, insbesondere für die aktuelle Temperatur Tᵢₛₜ des Heizelements 10, ab dem kein weiterer Energietransfer in das Heizelement 10 mehr erfolgt, um dieses nicht zu überhitzen.

Der Gleichstromzwischenkreis 23 ist mit einem elektrischen Speicherelement 13 (Energiespeicher) in Form eines Kondensators hoher Kapazität elektrisch verbunden. Bei Bremsvorgängen kann im Falle überschüssige Energie der Kondensator 13 geladen werden, was weitere Vorteile im rekuperativen Arbeitsmodus bringen kann.

Ein für den Betrieb der Spritzgießmaschine 2 erforderlicher Steuerstromkreis 14 wird über ein Schaltnetzteil 15 zur Erzeugung einer Steuerspannung (z. B. 24 VDC) aus dem Gleichstromzwischenkreis 23 mit elektrischer Energie versorgt. Der Steuerstromkreis 14 versorgt eine Vielzahl von elektrischen Verbrauchern, wie z. B. Maschinensteuerungen (CPU; Steuerung bzw. Recheneinheit), eine Bedieneinheit (MMI; Bildschirm, Eingabeeinheit), ein Steuerteil eines Servoumrichters (CPU), Sensoren, Meldelampen, Schütze, Schalter, Ventile, Magnete etc. Diese elektrischen Verbraucher stellen einen gewissen Anteil am Gesamtenergieverbrauch dar (z. B. 500 W).

Bei dem Halbleiterschaltelement 11 handelt es sich im Ausführungsbeispiel um einen Bipolartransistor mit isolierter Gate-Elektrode (insulated-gate bipolar transistor, kurz IGBT). Dies ist ein Halbleiterbauelement, das in der Leistungselektronik verwendet wird, da es Vorteile des Bipolartransistors (gutes Durchlassverhalten, hohe Sperrspannung, Robustheit) und Vorteile eines Feldeffekttransistors (nahezu leistungslose Ansteuerung) vereinigt. Vorteilhaft ist auch eine gewisse Robustheit gegenüber Kurzschlüssen, da der IGBT den Laststrom begrenzt.

Das Heizelement 10 ist dabei so beschaffen, dass er für die hohe bzw. höchst zulässige Spannung des Gleichstromzwischenkreises (z. B. 900 VDC) geeignet ist, kurzzeitig (z. B. für 250 ms) hohe Leistungsspitzen (z. B. 30 kW) aufnehmen kann und dabei seinen eigentlichen Zweck (vorliegend: das Heizen einer Zone des Plastifizierzylinders) hinsichtlich der Nennleistung erfüllen kann.

Das Heizelement 10 steht also gezielt zur Verfügung, falls durch das Gewinnen rekuperativer Energie aus den Motoren 16, 17, 18 ein Energieabbau im Gleichstromzwischenkreis 23 benötigt wird, wenn nämlich in Bremsphasen insbesondere anderen Elemente (Antriebe 16, 17, 18, Energiespeicher 13, Steuerstromkreis 14) dem Gleichstromzwischenkreis 23 nicht genügend Energie entnehmen, um die Zwischenkreisspannung nicht über einen maximal zulässigen Wert ansteigen zu lassen. Zudem hat das Heizelement 10 natürlich seine ursprüngliche Aufgabe, vorliegend also das Heizen einer Zone der Plastifiziereinheit.

Das Halbleiterschaltelement 11 kann in Abhängigkeit der Temperatur T des Heizelements 10 von einer entsprechenden Steuerung (im geschlossenen Regelkreis) angesteuert werden, um eine Soll-Temperatur aufrechtzuerhalten; hierzu ist dann ein entsprechender Temperatursensor am Heizelement 10 vorzusehen, der die Ist-Temperatur Tᵢₛₜ erfasst. Zur diesbezüglichen genauen Vorgehensweise wird ausdrücklich auf die EP 2 276 165 B1 Bezug genommen.

In der Figur geben die Pfeile die Richtung an, in denen Energie fließt. Demgemäß kann die Gleichstromquelle 7 nur Energie liefern, während der Energiespeicher 8 sowohl Energie abgeben als auch aufnehmen kann. Überschüssige Energie, die insbesondere aus Rekuperation gewonnen wurde oder die bei Überschuss aus der Photovoltaikanlage resultiert, kann auch in das Wechselstromnetz 4 abgegeben werden, was allerdings im Lichte der obigen Ausführungen nicht angestrebt wird, um Verluste zu minimieren.

Das Wechselstromnetz 4 hat typischer Weise eine Spannung von 400 VAC. Im Gleichstromnetz 6 werden beispielsweise Spannungen von ca. 600 VDC angestrebt. Der Steuerstromkreis 14 wird zumeist mit 24 VDC betrieben.

Am Rande sei erwähnt, dass an das Gleichstromnetz 6 natürlich auch mehrere Kunststoffverarbeitungsmaschinen, insbesondere Spritzgießmaschinen, angeschlossen werden können. Ebenfalls ist es möglich, hier andere Verbraucher mit anzuschließen, insbesondere die erwähnten Zusatzaggregate (Roboter).

### Bezugszeichenliste:

- 1: Fertigungsanlage
- 2: Kunststoffverarbeitungsmaschine (Spritzgießmaschine)
- 3: Energieversorgung
- 4: Wechselstromnetz (AC-Netz)
- 5: Stromrichter
- 6: Gleichstromnetz (DC-Netz)
- 7: Gleichstromquelle (Photovoltaikanlage)
- 8: Energiespeicher (Batterie)
- 9: Anschaltmodul
- 10: Heizelement
- 11: Halbleiterschaltelement (IGBT)
- 12: Steuerelement
- 13: Speicherelement (Kondensator)
- 14: Steuerstromkreis
- 15: Schaltnetzteil
- 16: Motor
- 17: Motor
- 18: Motor
- 19: Datenleitung
- 20: Datenleitung
- 21: Datenleitung
- 22: Datenleitung
- 23: Gleichstromzwischenkreis

## Patentansprüche

1. Verfahren zum Betreiben einer Fertigungsanlage (1),
wobei die Fertigungsanlage (1) mindestens eine Kunststoffverarbeitungsmaschine (2) und eine Energieversorgung (3) umfasst,
wobei die Kunststoffverarbeitungsmaschine (2) und/oder ein mit dieser zusammenwirkendes Zusatzaggregat mindestens einen Motor (16, 17, 18) umfasst, der zum Antrieb eines Bauteils der Kunststoffverarbeitungsmaschine (2) oder zum Antrieb des Zusatzaggregats ausgebildet ist sowie zum generatorischen Betrieb im Falle des Abbremsens einer Bewegung des Bauteils oder des Zusatzaggregats,
wobei die Kunststoffverarbeitungsmaschine (2) weiterhin mindestens ein Heizelement (10) zum Erwärmen von Kunststoffmaterial umfasst,
wobei die Energieversorgung (3) ein Wechselstromnetz (4) umfasst, welches über einen Stromrichter (5) mit einem Gleichstromnetz (6) verbunden ist, und eine Gleichstromquelle (7) umfasst, die mit dem Gleichstromnetz (6) verbunden ist, wobei die Kunststoffverarbeitungsmaschine (2) mit dem Gleichstromnetz (6) zur Versorgung mit elektrischer Energie verbunden wird,
wobei über ein Steuerelement (12) erfasst wird, ob der mindestens eine Motor (16, 17, 18) und/oder das Zusatzaggregat generatorisch Energie erzeugt, wobei im Falle dessen, dass vom Motor (16, 17, 18) und/oder vom Zusatzaggregat generatorisch Energie erzeugt wird, vom Steuerelement (12) ein Halbleiterschaltelement (11) angesteuert wird, um die generatorisch erzeugte Energie dem Heizelement (10) zuzuleiten,
wobei die Einspeisung generatorisch erzeugter Energie vom Motor (16, 17, 18) und/oder vom Zusatzaggregat in einen Gleichstromzwischenkreis (23) der Kunststoffverarbeitungsmaschine (2) erfolgt, der mit dem Gleichstromnetz (6) verbunden werden kann und wobei mindestens ein Speicherelement (13) für elektrische Energie, insbesondere ein Kondensator, mit dem Gleichstromzwischenkreis (23) elektrisch verbunden ist,
wobei als Gleichstromquelle (7) eine Photovoltaikanlage eingesetzt wird, wobei vom Gleichstromnetz (6) Energie in einen Energiespeicher (8) in Form einer Batterie übertragen oder von diesem abgezogen wird, wobei elektrische Energie zwischen dem Gleichstromnetz (6) und dem Gleichstromzwischenkreis (23) über ein Anschaltmodul (9) übertragen wird und wobei das Verfahren die Schritte aufweist:
a) Bestimmung der Summe der aktuell verfügbaren Rekuperationsenergie, die alle generatorisch arbeitenden Motoren (16, 17, 18) und/oder Zusatzaggregate liefern;
b) Bestimmung der Summe der aus dem Gleichstromzwischenkreis (23) entnommenen Energie, die alle an den Gleichstromzwischenkreis (23) angeschlossenen Verbraucher benötigen;
c) Bestimmung der Differenz zwischen der Summe der Rekuperationsenergie gemäß Schritt a) und der Summe der entnommenen Energie gemäß Schritt b);
d) Veranlassung der Einspeisung von Energie in das Heizelement (10) durch das Steuerelement (12) und das Halbleiterschaltelement (11), wobei dem Heizelement (10) der gemäß Schritt c) ermittelte Differenzbetrag an Energie zugeführt wird.

2. Verfahren nach Anspruch 1, **dadurch gekennzeichnet, dass** der mindestens eine Motor (16, 17, 18) der Kunststoffverarbeitungsmaschine (2) als drehzahlvariabler Antrieb ausgebildet ist.

3. Verfahren nach Anspruch 1 oder 2, **dadurch gekennzeichnet, dass** das Halbleiterschaltelement (11) als Bipolartransistor mit isolierter Gate-Elektrode (Insulated Gate Bipolar Transistor, IGBT) ausgebildet ist.

4. Verfahren nach einem der Ansprüche 1 bis 3, **dadurch gekennzeichnet, dass** die Temperatur (Tᵢₛₜ) in einem mit dem Heizelement (10) erwärmten Bauteil im geschlossenen Regelkreis auf einer vorgegebenen Temperatur (T) gehalten wird, insbesondere mittels des Steuerelements (12).

5. Verfahren nach einem der Ansprüche 1 bis 4, **dadurch gekennzeichnet, dass** die Kunststoffverarbeitungsmaschine (2) eine Spritzgießmaschine ist.

6. Verfahren nach Anspruch 5, **dadurch gekennzeichnet, dass** das Heizelement (10) die Zylinderheizung einer Plastifiziereinheit der Spritzgießmaschine ist.

7. Verfahren nach einem der Ansprüche 1 bis 6, **dadurch gekennzeichnet, dass** das Zusatzaggregat ein Roboter ist, der mit der Kunststoffverarbeitungsmaschine (2) zusammenwirkt.

8. Verfahren nach einem der Ansprüche 1 bis 7, **dadurch gekennzeichnet, dass** ein Steuerstromkreis (14) elektrisch über ein Schaltnetzteil (15) mit dem Gleichstromzwischenkreis (23) in Verbindung steht, wobei die elektrischen Verbraucher der Kunststoffverarbeitungsmaschine (2) vom Gleichstromzwischenkreis (23) aus mit Energie versorgt werden und vom Steuerstromkreis (14) aus angesteuert werden.

## Claims

1. Method for operating a production arrangement (1),
wherein the production arrangement (1) comprises at least one plastic processing machine (2) and an energy supply (3),
wherein the plastic processing machine (2) and/or an auxiliary unit interacting with it comprises at least one motor (16, 17, 18) which is designed to drive a component of the plastic processing machine (2) or to drive the auxiliary unit, and also to operate as a generator in the event of deceleration of a movement of the component or of the auxiliary unit,
wherein the plastic processing machine (2) further comprises at least one heating element (10) for heating plastic material,
wherein the energy supply (3) comprises an alternating current network (4) which is connected to a direct current network (6) via a power converter (5), and comprises a direct current source (7) which is connected to the direct current network (6), wherein the plastic processing machine (2) is connected to the direct current network (6) for the supply of electrical energy,
wherein a control element (12) detects whether the at least one motor (16, 17, 18) and/or the auxiliary unit generates energy in a generator mode,
wherein, if energy is generated in a generator mode by the motor (16, 17, 18) and/or by the auxiliary unit, the control element (12) activates a semiconductor switching element (11) in order to feed the energy generated by the generator to the heating element (10),
wherein the generator-generated energy is fed from the motor (16, 17, 18) and/or from the auxiliary unit into a direct current intermediate circuit (23) of the plastic processing machine (2), which can be connected to the direct current network (6), and wherein at least one storage element (13) for electrical energy, in particular a capacitor, is electrically connected to the direct current intermediate circuit (23),
wherein a photovoltaic system is used as the direct current source (7), wherein energy is transferred from the direct current network (6) to an energy storage device (8) in the form of a battery or withdrawn therefrom, wherein electrical energy is transferred between the direct current network (6) and the direct current intermediate circuit (23) via a connection module (9), and wherein the method comprises the steps:
a) Determination of the sum of recuperation energy currently available, which is supplied by all motors (16, 17, 18) operating as generators and/or auxiliary units;
b) Determination of the sum of the energy taken from the direct current intermediate circuit (23) that is required by all consumers connected to the direct current intermediate circuit (23);
c) Determination of the difference between the sum of the recuperation energy according to step a) and the sum of the extracted energy according to step b);
d) Initiating the supply of energy to the heating element (10) by means of the control element (12) and the semiconductor switching element (11), wherein the difference in energy determined in step c) is supplied to the heating element (10).

2. Method according to claim 1, **characterised in that** the at least one motor (16, 17, 18) of the plastic processing machine (2) is designed as a variable-speed drive.

3. Method according to claim 1 or 2, **characterised in that** the semiconductor switching element (11) is designed as an insulated gate bipolar transistor (IGBT).

4. Method according to one of claims 1 to 3, **characterised in that** the temperature (Tᵢₛₜ) in a component heated by the heating element (10) is maintained at a predetermined temperature (T) in a closed control loop, in particular by means of the control element (12).

5. Method according to one of claims 1 to 4, **characterised in that** the plastic processing machine (2) is an injection moulding machine.

6. Method according to claim 5, **characterised in that** the heating element (10) is the cylinder heater of a plasticising unit of the injection moulding machine.

7. Method according to one of claims 1 to 6, **characterised in that** the auxiliary unit is a robot that interacts with the plastic processing machine (2).

8. Method according to one of claims 1 to 7, **characterised in that** a control circuit (14) is electrically connected to the direct current intermediate circuit (23) via a switching power supply (15), wherein the electrical consumers of the plastic processing machine (2) are supplied with energy from the direct current intermediate circuit (23) and are controlled from the control circuit (14).

## Revendications

1. Procédé de fonctionnement d'une installation de fabrication (1),
l'installation de fabrication (1) comprenant au moins une machine de transformation de matières plastiques (2) et une alimentation en énergie (3),
la machine de transformation de matières plastiques (2) et/ou un équipement auxiliaire coopérant avec celle-ci comprenant au moins un moteur (16, 17, 18) conçu pour entraîner un composant de la machine de transformation de matières plastiques (2) ou pour entraîner l'équipement auxiliaire ainsi que pour fonctionner en générateur en cas de freinage d'un mouvement du composant ou de l'équipement auxiliaire,
la machine de transformation de matières plastiques (2) comprenant en outre au moins un élément chauffant (10) destiné au chauffage d'un matériau plastique,
l'alimentation en énergie (3) comprenant un réseau à courant alternatif (4) qui est relié à un réseau à courant continu (6) par l'intermédiaire d'un convertisseur de courant (5), et comprenant une source de courant continu (7) qui est reliée au réseau à courant continu (6), la machine de transformation de matières plastiques (2) étant reliée au réseau à courant continu (6) pour être alimentée en énergie électrique,
un élément de commande (12) détectant si l'au moins un moteur (16, 17, 18) et/ou l'équipement auxiliaire produit de l'énergie en mode générateur, un élément de commutation à semi-conducteur (11) étant commandé par l'élément de commande (12) dans le cas où de l'énergie est produite en mode générateur par le moteur (16, 17, 18) et/ou par l'équipement auxiliaire, afin d'acheminer l'énergie produite en mode générateur vers l'élément chauffant (10),
l'injection d'énergie produite en mode générateur par le moteur (16, 17, 18) et/ou par l'équipement auxiliaire s'effectuant dans un circuit intermédiaire à courant continu (23) de la machine de transformation de matières plastiques (2), qui peut être relié au réseau à courant continu (6), et au moins un élément de stockage (13) de l'énergie électrique, en particulier un condensateur, étant relié électriquement au circuit intermédiaire à courant continu (23),
une installation photovoltaïque étant utilisée comme source de courant continu (7), de l'énergie étant transférée du réseau à courant continu (6) vers un accumulateur d'énergie (8) sous la forme d'une batterie ou étant soutirée de celui-ci, de l'énergie électrique étant transférée entre le réseau à courant continu (6) et le circuit intermédiaire à courant continu (23) par l'intermédiaire d'un module de connexion (9) et le procédé comprenant les étapes suivantes :
a) détermination de la somme de l'énergie de récupération actuellement disponible que fournissent tous les moteurs (16, 17, 18) et/ou équipements auxiliaires fonctionnant en mode générateur ;
b) détermination de la somme de l'énergie soutirée du circuit intermédiaire à courant continu (23) dont ont besoin tous les consommateurs raccordés au circuit intermédiaire à courant continu (23) ;
c) détermination de la différence entre la somme de l'énergie de récupération selon l'étape a) et la somme de l'énergie soutirée selon l'étape b) ;
d) déclenchement de l'injection d'énergie dans l'élément chauffant (10) par l'élément de commande (12) et l'élément de commutation à semi-conducteur (11), la quantité d'énergie égale à la différence déterminée selon l'étape c) étant fournie à l'élément chauffant (10).

2. Procédé selon la revendication 1, **caractérisé en ce que** l'au moins un moteur (16, 17, 18) de la machine de transformation de matières plastiques (2) est conçu sous forme d'entraînement à vitesse de rotation variable.

3. Procédé selon la revendication 1 ou 2, **caractérisé en ce que** l'élément de commutation à semi-conducteur (11) est conçu sous forme de transistor bipolaire à grille isolée (Insulated Gate Bipolar Transistor, IGBT).

4. Procédé selon l'une quelconque des revendications 1 à 3, **caractérisé en ce que** la température (Tᵢₛₜ) dans un composant chauffé par l'élément chauffant (10) est maintenue à une température prédéfinie (T) dans une boucle de régulation fermée, en particulier au moyen de l'élément de commande (12).

5. Procédé selon l'une quelconque des revendications 1 à 4, **caractérisé en ce que** la machine de transformation de matières plastiques (2) est une machine de moulage par injection.

6. Procédé selon la revendication 5, **caractérisé en ce que** l'élément chauffant (10) est le dispositif de chauffage de cylindre d'une unité de plastification de la machine de moulage par injection.

7. Procédé selon l'une quelconque des revendications 1 à 6, **caractérisé en ce que** l'équipement auxiliaire est un robot qui coopère avec la machine de transformation de matières plastiques (2).

8. Procédé selon l'une quelconque des revendications 1 à 7, **caractérisé en ce qu'**un circuit de commande (14) est en liaison électrique avec le circuit intermédiaire à courant continu (23) par l'intermédiaire d'une alimentation à découpage (15), les consommateurs électriques de la machine de transformation de matières plastiques (2) étant alimentés en énergie à partir du circuit intermédiaire à courant continu (23) et étant commandés à partir du circuit de commande (14).
